# EUROPEAN PATENT SPECIFICATION

(11) **EP 3 074 558 B1**
(45) Date of publication and mention of the grant of the patent: **05.01.2022**
(21) Application number: 13815596.5
(22) Date of filing: 27.11.2013
(51) Int. Cl.: D04B 21/20, F16L 11/08

(54) **FLEXIBLE HOSE**
FLEXIBLER SCHLAUCH
TUYEAU FLEXIBLE

(43) Date of publication of application: 05.10.2016
(73) Proprietor: Cell-Fast Sp. ZO.O., 37-450 Stalowa Wola (PL)
(72) Inventor: SLABIK, Janusz, PL-38-400 Krosno (PL)
(74) Representative: Klassek, Maciej Adam
(86) International application number: PCT/PL2013/000150
(87) International publication number: WO 2015/080607

(56) References cited:
- EP-A1- 1 271 031
- WO-A1-2010/131216
- US-A1- 2005 238 832

## Description

The invention refers to a flexible hose made of plastic or rubber, which is reinforced with a mesh stocking, to be used for distribution of fluids under pressure.

There is commonly known a solution where a hose has at least one outer layer made of plastic of rubber with a tubular fabric net coated with a layer of plastic for protection. Said fabric net increases the hose's resistance to internal pressure of distributed fluid, and reduces its deformation.

One of the known and most frequently used types of hoses is a hose where the reinforcement net laid on the internal tubular layer consists of a series of threads wound in a spiral over the hose, said threads being arranged parallel, equally spaced and overlaying as many other transversal threads arranged in an opposite direction so as to form a regular rhombus lattice. This net has an external plastic layer on it for net protection and stabilization achieved by joining the net together with the external surface of the internal tubular layer.

The aforesaid known hose design is characterized by little, limited flexibility and a tendency for hose walls to crease at smaller bending radiuses.

There is also known from the European Patent Application EP 0527512A1 a flexible hose design with a reinforcement mesh having an internal cylindrical layer with a wire net on it, which in turn is covered with another external cylindrical layer. Substantially, net mesh has a trapezoid shape.

One of the known and popular hoses with a reinforcement mesh stocking is a hose with a tricot type net or a tricot chain. A tricot net is a version of a loop net, where every thread forms a loop by interlacing with one or more threads on its right or left.

The tricot mesh net hose is characterized by better elasticity and flexibility compared to known hoses with a different braid, however, an increase in the pressure inside the hose makes it subject to a torsional effect resulting from the helical run of the mesh lines which, as opposed to the essentially longitudinal run of the rows, cause a torque of the hose leading to its spiral torsion.

This phenomenon has been eliminated by the use of the helical arrangement of the mesh net, where in addition to the helical arrangement of the rows, the mesh lines are helically arranged in the direction opposite to the direction of the rows arrangement. This design leads to symmetrical distribution of stresses caused by internal pressure of fluid distributed in the hose relative to the hose axis, and eliminates or significantly reduces hose torsion.

There is known from the European Patent description EP0623776B1 a hose design, which from the inside to the outside has at least one tubular layer made of plastic or rubber, a net-like chain mesh stocking having a tubular shape, with warp lines and rows of weave, which is laid on the outer surface of the internal layer, and an external layer protecting a mesh stocking, with mesh net lines slanted against the longitudinal axis of the hose.

From the international patent application WO97/41719 there is known a reinforced flexible hose design, with at least one inner tubular layer of plastic or rubber, with an outer diameter and a longitudinal axis; chain-knitted reinforcement layer with rows of substantially parallel stitches, and lines of substantially parallel stitches, with a respective number of stitches per unit of length in the longitudinal direction. The knitted reinforcement layer has the form of a single tubular layer, and is laid on the outer surface of the internal tubular layer, and rows of stitches and lines of stitches are substantially helical with respective longitudinal pitches and inclinations, which are mutually opposite with respect to the longitudinal axis of the hose. This known hose does also have an outer tubular layer which is laid on the said reinforcement layer so as to secure it, wherein the longitudinal pitch of the lines of stitches is substantially proportionate to the square of the outer diameter of the inner layer. The rows and lines of the substantially helical mesh stitches have different inclination angles, the sum of which is substantially constant and equal to or a little smaller than 90° depending on changes in the value of outer external diameter of the inner layer. The inclination angle of the line of stitches is substantially proportionate to the square root of the outer diameter of the internal layer. This known hose has a mesh stocking with equal pitches between the lines and rows over its entire length.

The known hose designs as described above, where the torsion of the hose due to internal pressure of the distributed liquid has been limited as a result of using a specific mesh stocking design, have thus become less elastic structures with lower torsion flexibility about the longitudinal axis. This is an undesirable property while using the hose in gardening, where it is mainly to be used. Manual operation of spraying nozzles, lances and straight sprays connected to this hose is uncomfortable and tiresome while moving around plants.

From the international patent application WO2010/131216A1 there is known a structure of a reinforced flexible hose with high pressure strength, comprising at least one inner layer made of a first thermoplastic polymer material, at least one reinforcement layer comprising at least one first plurality of yarns knitted together to form a first plurality of chain stitches of a tricot type, and at least one second outer layer made of a second thermoplastic polymer material. At least one first yarn of said yarns of said first plurality consists of a high tenacity fiber that has a tenacity of at least 1500 mN/tex, as measured according to the EN ISO 2062 standard, said at least one reinforcement layer comprising at least one second yarn consisting of a polyester fiber or a fiber of substantially equal tenacity. The said second yarn is fastened to said at least one first wire to keep the latter adhering to the first inner layer.

The American patent application US2005238832 (A1) discloses a flexible hose for transporting fluids, having a variable reinforcement. The hose comprises a polymeric inner tubular structure having an inner surface through which a fluid is conveyed and an outer surface; an outer protective cover; and a reinforcement member disposed between the inner tubular structure and the outer protective cover, wherein the reinforcement member exhibits variable reinforcement characteristics in the hose length.

Also the European patent application EP1271031 A1 discloses a hose reinforced by a knitted fabric. In said flexible hose the knitted fabric is a warp-knitted fabric comprising meshes inclined in opposite directions and one of the rows of stitches is inclined in one direction and the other in the other direction and so on. The stitches form an angle close to forty-five degrees and a distance between mesh is four millimeters.

The purpose of the invention is to deliver a hose design characterized by higher elasticity in the plane perpendicular to its longitudinal axis, and by higher resistance to torsion.

A flexible hose according to the invention has an elastic and flexible internal tubular layer, with a chain-knitted reinforcement mesh stocking on its outer surface, with rows of loops in the helical arrangement, and lines of warp arranged in a transverse direction, as well as an outer elastic and flexible tubular layer for protection purposes, wherein the pitch and inclination angle of the coils of loops and/or warp lines of the mesh stocking relative to the longitudinal axis of the hose change periodically over its length.

The flexible hose according to the invention shows particularly favorable usability properties when the angle of inclination of the helical line of the rows of warp of the mesh stocking relative to the longitudinal axis changes periodically from 45° to 75°.

The flexible hose according to the invention also shows particularly favorable usability properties when the angle of inclination of the coils of the helical line of the stitches of the mesh stocking relative to the hose axis changes within the range from 4° to 32°.

The internal tubular layer and the outer tubular layer can be made of rubber material or polymer mixtures containing plasticized polyvinyl chloride.

A structure of the hose according to the invention, where the rows of mesh and lines of warp of the mesh stocking arranged along the helical lines of a periodically changeable pitch and angle of inclination relative to the longitudinal axis of the hose form a tubular net, where the stresses generated by internal pressure of the fluid distributed by the hose reduce each other along the hose axis and do not form the summary torque torsioning the hose about its longitudinal axis, and at the same time increase its flexibility in the plane perpendicular to the longitudinal axis of the hose. Flexible hoses having the design according to the invention show higher resistance to torsion and deformations generated by internal pressure of the transported fluid.

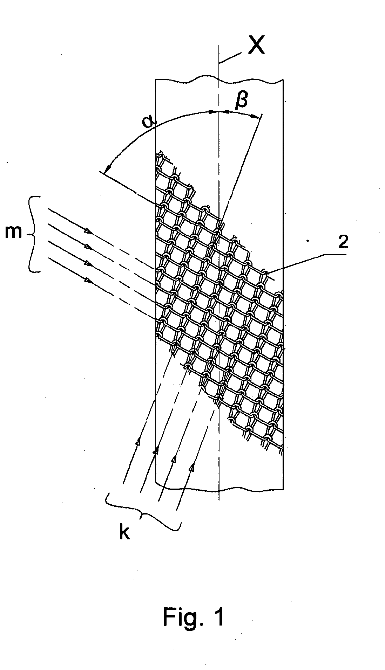

The object of the invention is presented as an embodiment in the attached drawing, where
fig.1 shows an enlarged view of the section of the hose according to the invention with a mesh stocking,

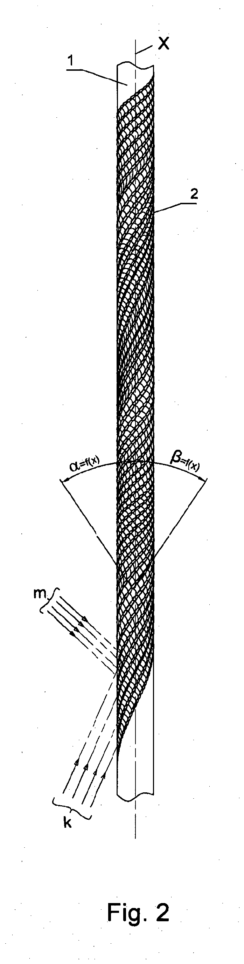

fig. 2 shows a side view of the section of the hose,

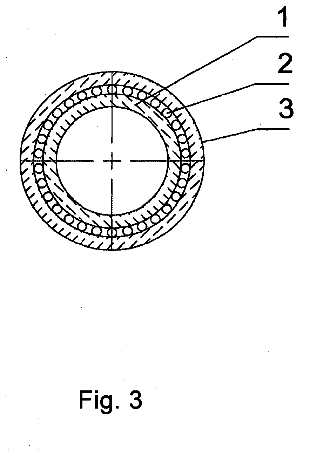

fig.3 shows a cross-sectional view of the hose, and

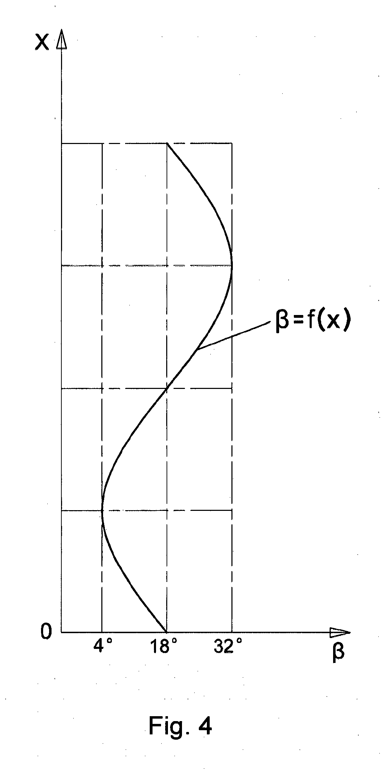

fig. 4 shows a chart with changes in the angle (**β**) of inclination of the coils of the helical line (**k**) of the stitches of the mesh stocking **(2)** relative to the longitudinal axis **(X)** of the hose.

A flexible hose according to the invention has an internal tubular layer **1** with a reinforcement mesh stocking **2** on its outer surface, made of the lines **k** of stitches arranged helically over the hose length, and the lines **m** of the rows of warp, with an angle **β** of inclination of the lines **k** of the stitches relative to the hose axis **X** changing smoothly on a periodic basis over the hose length according to the sinusoid in the scope of 12° to 26°. An internal tubular layer **1** and an outer tubular layer **3** are made of elastic and flexible mixture of plasticized polyvinyl chloride, and a mesh stocking **2** is made of oriented polyester yarn.

## Claims

1. A flexible hose having at least one elastic and flexible internal tubular layer (1), a reinforcement chain-knitted tubular mesh stocking (2) which is made of the lines (k) of stitches arranged helically, and the lines (m) of warp rows arranged in a transverse direction, and an outer elastic and flexible tubular layer (3) securing the mesh stocking from the outside, **characterized in that** pitches and angles (**α,β**) of inclination of the helical coils of the lines **(m)** of warp rows and/or helical coils of the lines (**k**) of stitches of the mesh stocking **(2)** relative to the longitudinal hose axis **(X)** change periodically over the hose's length.

2. A hose according to claim 1, **characterized in that** pitches and inclination angles (**α,β**) of the helical coils of the lines **(m)** of warp rows and/or helical coils of the lines (**k**) of stitches of the mesh stocking **(2)** relative to the hose axis **(X)** change regularly on a periodic basis in a sinusoidal pattern.

3. A hose according to claim 1 or claim 2, **characterized in that** an angle (**α**) of inclination of the helical line **(m)** of warp rows of the net of the mesh stocking **(2)** relative to the longitudinal axis **(X)** changes on a periodic basis within the range from 45° to 75°.

4. A hose according to claim 1 or claim 2 or claim 3, **characterized in that** an angle (**β**) of inclination of the helical line of the lines **(k)** of stitches of the net of the mesh stocking **(2)** relative to the longitudinal axis **(X)** changes on a periodic basis in the range from 4° to 32°.

## Patentansprüche

1. Flexibler Strumpf mit mindestens einer elastischen und flexiblen inneren strumpfförmigen Schicht (1), einem kettengestrickten, strumpfförmigen Verstärkungsmaschenstrumpf (2), der aus den Linien (k) von spiralförmig angeordneten Maschen und den Linien (m) von in Querrichtung angeordneten Kettreihen besteht, sowie aus einem äußeren Gummiband und
einer flexiblen Strumpflage (3), die den Netzstrumpf von außen sichert, die **dadurch gekennzeichnet ist, dass** Steigungen und Neigungswinkel (a,ß) der Wendelwindungen der Linien (m) der Kettreihen und/oder Wendelwindungen der Schnüre (k) der Maschen des Netzstrumpfes (2) relativ zur Strumpflängsachse (X) sich über die Strumpflänge periodisch ändern.

2. Ein Strumpf nach Anspruch 1, **dadurch gekennzeichnet, dass** Steigungen und Neigungswinkel (a,ß) der Windungen der Reihen (m) der Kettreihen und/oder der Windungen der Reihen (k) der Maschen des Maschenstrumpfes (2) sich relativ zur Strumpfachse (X) regelmäßig periodisch in einem sinusförmigen Verlauf ändern.

3. Ein Strumpf nach Anspruch 1 oder 2 , **dadurch gekennzeichnet, dass** der Neigungswinkel (a) der Windungen der Reihen (m) der Kettreihen des Netzes des Maschenstrumpfes (2) sich relativ zur Längsachse (X) periodisch im Bereich von 45° bis 75° ändert.

4. Ein Strumpf nach Anspruch 1 oder Anspruch 2 oder Anspruch 3, **dadurch gekennzeichnet, dass** der Neigungswinkel (ß) der Windungen der Reihen der Nähte (k) des Netzes des Maschenstrumpfes (2) sich relativ der Längsachse (X) periodisch im Bereich von 4° bis 32° ändert.

## Revendications

1. Tuyau flexible comportant au moins une couche tubulaire interne élastique et flexible (1), un bas de renfort tubulaire à mailles en chaîne (2) qui est constitué des lignes (k) de mailles disposées en hélice, et des lignes (m) de fils de chaîne rangées disposées dans une direction transversale, et une couche tubulaire extérieure élastique et souple (3) fixant le bas à mailles de l'extérieur, **caractérisé en ce que** les pas et les angles (α,β) d'inclinaison des spires hélicoïdales des lignes (m) de rangées de chaîne et/ou les spires hélicoïdales des lignes (k) de mailles du bas à mailles (2) par rapport à l'axe longitudinal du tuyau (X) changent périodiquement sur la longueur du tuyau.

2. Tuyau selon la revendication 1, **caractérisé en ce que** les pas et les angles d'inclinaison (α,β) des spires des lignes (m) des rangs de chaîne et/ou des spires des lignes (k) des mailles du bas à mailles (2) par rapport à l'axe du tuyau (X) changent régulièrement sur une base périodique selon un type sinusoïdal.

3. Tuyau flexible selon la revendication 1 ou la evendication 2, **caractérisé en ce qu'**un angle (g) d'inclinaison de la ligne hélicoïdale (m) de rangs de chaîne du filet du bas à mailles (2) par rapport à l'axe longitudinal (X) change périodiquement dans la plage de 45° à 75°.

4. Tuyau selon la revendication 1 ou la revendication 2 ou la revendication 3, **caractérisé en ce qu'**un angle (β) d'inclinaison de la ligne hélicoïdale des lignes (k) de mailles du filet du bas à mailles (2) par rapport à la ligne longitudinale l'axe (X) change périodiquement dans la plage de 4° à 32°.
